# EUROPEAN PATENT SPECIFICATION

(11) **EP 3 626 519 B1**
(45) Date of publication and mention of the grant of the patent: **10.11.2021**
(21) Application number: 19382781.3
(22) Date of filing: 09.09.2019
(51) Int. Cl.: B60N 2/28

(54) **CAR SAFETY SEAT SET**
AUTOSICHERHEITSSITZ-SET
ENSEMBLE DE SIÈGES DE SÉCURITÉ POUR VOITURE

(30) Priority: 10.09.2018 ES 201830877
(43) Date of publication of application: 25.03.2020
(73) Proprietor: JANE, S.A., 08184 Palau Solità i Plegamans Barcelona (ES)
(72) Inventor: JANE SANTAMARIA, Manuel, 08184 PALAU SOLITÀ I PLEGAMANS (ES)
(74) Representative: Ponti & Partners, S.L.P

(56) References cited:
- WO-A1-2015/040068
- US-A1- 2009 066 130
- US-B2- 7 097 245

## Description

This invention concerns a child safety seat set for a car. In particular, the present invention refers to a safety seat set for a car that has a Isofix-type rear seat connection with a support leg, this seat set being suitable to be used from 40 cm to 150 cm in the baby/child size range, meaning that it can be used from the time the child is a baby (0 years) until they are 10-12 years old.

### Background of the invention

In order to comply with the legislation of each country and also with the expert recommendations, child seats should be used between the ages of birth and approximately 10-12 years.

There are currently several types of child safety seats that can be installed in the rear seats of cars, generally designed for a specific baby/child size and/or weight range. For this reason, these child seats are classified according to different groups, depending on the size and/or weight range.

In general, there are mainly two types of baby seats with a size range of 40 cm to 75 cm (i.e. approximately 0 to 10-13 kg): firstly, carrycots, and secondly, baby seats. These baby seats should always be installed facing backwards.

In general, seats intended for babies with a size range of 60 cm to 105 cm (i.e. approximately 9 to 18 kg) consist of child seats that are attached to the rear seat of the vehicle with the safety belt or with the Isofix connection system, and where the child normally travels attached to the child seat with a strap or safety harness from the seat itself, being able to look forward or backwards, depending on the child's size/weight and the specific regulations of the country. Increasingly more, recent studies are recommending that these seats be placed facing backwards in order to avoid cervical injuries.

Seats for children from a size range of 105 cm (i.e. approximately 15 to 36 kg) consist of child seats, but in this case they are specially designed to secure the child and the seat itself with the car's own seat belt (i.e. without anchoring the seat belt of the child seat itself). This type of child seat "lifts" the person in it so that the vehicle seat belt fits properly.

Some car seat models can be used for two or more different size ranges. However, there are different issues associated with the design of car seats that can be used for two or more different size ranges.

Furthermore, in 2013 the European safety standard for car safety seats "i-Size" came into force, which states, among other things, that babies up to 15 months must travel facing backwards (also known by the acronym "RF", rearward facing), and that child safety seats must be attached to the seat of the vehicle by means of the Isofix system.

In addition, the current design trend is for children up to 3-4 years of age to travel facing backwards in order to minimise possible neck injuries in an accident.

The Isofix vehicle anchoring system, which provides maximum safety against accidents, consists of two connectors that hold the seat by the lower rear part, anchoring it to hooks in the vehicle, and also a third point to prevent the seat from rotating forward in the event of a frontal collision. The industry has developed two different systems as a third point: the "Top Tether" and the "Support Leg". The "Top Tether" consists of a belt that comes out of the upper back of the seat and is attached to the so-called third Isofix connection point, located behind the seat where it is installed; and the support leg is an adjustable length leg that comes out of the front area of the base of the seat and keeps its distance to the floor fixed, preventing the seat from swinging forward.

For this reason, the new seats for a size range of up to 105 cm must be able to be positioned facing backwards (RF) and be able to correctly and comfortably accommodate the baby/child up to 3-4 years of age. However, the seats currently available to be placed in the RF direction are not entirely practical due to problems of space and comfort of the child (especially when the child is 3 or 4 years old).

At present, there are some models of seats for a size range up to 105 cm that can be mounted facing forwards (front-facing, FF) also facing backwards (RF), depending on the size and specific weight of the child, thanks to lower platforms that allow the seat to rotate.

There are also some specific models of car seats suitable for use for newly-born babies up to children aged 10-12, with their position (RF/FF) and/or configuration being able to be modified depending on the size of the child. However, some of them do not have Isofix anchoring systems to the rear seat of the vehicles, or they do not have support legs, or they do not allow the seat to be used facing backwards when the child is 3 or 4 years old, or they are not comfortable for the baby or child.

WO-A-2015040068 discloses a child safety seat with a seat, a isofix-base and a foldable support leg.

In view of the above, it is clear that there is a need to provide a new design for car safety seats set with an Isofix attachment to the vehicle with a support leg, and that can be used comfortably by an infant/child from 0 to 3-4 years of age facing backwards (RF), and also by an infant/child from 1-3'5 to 10-12 years of age facing forwards (FF).

### Description of the invention

The first objective of the present invention is, therefore, to provide a child safety seat set for a car, which can be used comfortably and with space for a baby measuring 40 cm up to a child measuring 150 cm in size, solving the aforementioned inconveniences and presenting the advantages described below.

In accordance with this first mentioned objective, the present invention concerns a child safety seat for a car, comprising:
- a fixed Isofix base and
- a first seat, fixed in a rotary way on the fixed Isofix base, where the first seat is suitable to anchor above a second seat which is smaller size, and where the first seat comprises at least:
   - one outer casing in the form of a seat, comprising a seat, a backrest with sides and two armrests, and
   - an inner rigid structure mounted on the fixed Isofix base so that the first seat can rotate with respect to the fixed Isofix base and can be anchored in two different positions: a first position facing forwards and a second position facing backwards,
   characterised in that the inner rigid structure comprises:
   - a swivel base solidly attached to an upper structure which extends upwards until reaching a part near the back of the first seat, wherein this rigid structure is configured for being mounted in the lower and rear part of the outer casing of the first seat, and where the swivel base is configured for being mounted in a rotatory manner on the fixed Isofix base; and
   - a foldable support leg, which is integrated into the rigid structure, the support leg being height adjustable and hinged at its upper end to one rear part of the upper structure of the rigid structure, so that the support leg can adopt two different positions:
      - an unfolded position when the first seat is facing backwards, in which the support leg is separated from the rigid structure, or
      - a folded position when the first seat is facing frontwards, in which the support leg is anchored by a lower part to a part of the fixed Isofix base, in such a way that, in this folded position, one inferior part of the support leg remains fixed to the Isofix base and acts as a reinforcement of the rigid structure.

Furthermore, the child car safety seat may optionally comprise a second seat, smaller in size than the first seat, that can be releasably anchored on the first seat.

Thanks to this advantageous configuration, the user of this child car seat has a seat that is always attached to the rear seat of the Isofix-supporting vehicle (i.e. maximum safety), and which can be used for babies measuring from 40 to 105 cm facing backwards (RF) and for babies measuring 60 cm (or 100 cm) to 150 cm facing frontwards (FF). Hereinafter, the abbreviations RF and FF will be used. The child safety set of this invention can be used in the following way, although it can also be mounted in other positions:
- When the seat is used by a baby measuring approximately 40 cm to 75 cm, the second seat, smaller than the first seat, is anchored on top of the first seat by means of removable means of anchoring, and the first seat is arranged in the RF position, and the baby sits comfortably on the second seat, which is configured to be used by a baby measuring approximately 40 cm to 75 cm.
- When the seat is used by a baby measuring approximately 60 cm to 105 cm, the second seat is unhooked from the first seat by an easy manual action of unhooking the removable means of anchoring, and the baby sits on the first seat that is arranged in RF position and is tied with the five-point belt, providing ample space for the baby.
- When the seat is used by a child measuring approximately 100 cm to 135 cm or 150 cm, the first seat is unhooked from the Isofix anchors, rotated 180° with respect to the Isofix base, the support leg folded and stored behind the seat by means of its hinge, and is placed in the FF position and the Isofix base is reattached to the Isofix anchors (now replacing the third point of the support leg with the "Top Tether"), and the child sits on the first seat in the FF position and is tied with the belt of the car, keeping the five-point belt of the first seat inside the seat.
- When the seat is used by a child measuring approximately 120 cm to 150 cm, the first seat is used in the same FF position, and in order to adapt the measurements of the seat to the child, the back of the first seat is adjusted by raising it upwards, so that the seat expands vertically upwards in different positions in height. The child sits on the first seat and is tied with the vehicle belt.

Both the first and second seats comprise a safety harness, commonly called a five-point belt (or harness belt), so that the baby can be held when placed on the second seat and when placed on the first seat. When the first seat is used for babies measuring over 105 or 100 cm, the five-point belts are no longer used, but rather the vehicle's own seat belt. In this way, the set of the invention has the advantage that both the first and the second seat can be used when the child is still small, securing them with the five-point belt.

According to a preferred example of the embodiment of the invention, the outer casing of the first seat comprises a seat, a backrest with some sides, two armrests, and a headrest extendable in height. The provision of the height extendible headrest, known in other seats, allows the first seat to be extendable in height in different height positions by means of the action of a push button, which activates the upward or downward movement of the headrest on the back of the first seat, to adapt the first seat to the size of the child. As an example, the adjustable headrest may have four or five different positions. The height adjustment of the headrest has the advantage that it better protects the child in cases of lateral shock while holding the child's head. In addition, the outer casing has a very particular and advantageous shape, especially the part of its seat, with a very specific curved geometry that allows the second seat to be housed inside. In addition, the outer casing also has housings on the outer rear and bottom, to be able to receive and be fixed to the rigid structure. Preferably, each armrest has a respective housing to receive each of the anchor points of the second seat. Depending on the possible design of the outer casing, each side of the outer casing has an upper part with a respective housing for the passage of the vehicle belt.

However, the second smaller seat may be anchored by its corresponding anchor points to the first seat at other points arranged at a location other than the armrests, without altering the essentiality of the invention.

Advantageously, the outer casing of the first seat can be reclined in different reclining positions compared to the rigid structure + the support leg that are fixed by means of the manual action of a pushbutton. Thanks to this advantageous feature, the first seat can be reclined in different reclining positions with respect to the fixed Isofix base, to adapt to the different needs of the child. As an example, the adjustment of the inclination of the first seat with respect to the rigid structure is of five different positions. In other words, the rigid structure (which integrally incorporates the folding support leg) is fixed, while the first seat is held on the rigid structure can be tilted with different β angles. This tilt system can be of the type of a mechanism already known in the market.

Since the support leg is configured in a fixed manner with respect to the interior structure (instead of being attached the support leg to the first seat's casing, as in most conventional baby seats) it provides great advantages, since once the support leg on the floor of the interior of the vehicle and anchored Isofix anchors, the casing of the first seat can be reclined regardless of the support leg that will never move or be adjusted again depending on the reclined position. This greatly facilitates the handling of this chair by the user, and minimizes assembly errors.

According to a preferred example of embodiment, the rigid structure comprises a lower swivel base that is solidly (fixedly) attached to a bar structure, where this rigid structure is permanently mounted on the bottom and back of the outer casing of the first seat, and where the swivel base is mounted on the fixed Isofix base.

According to a preferential example of embodiment, the rigid structure comprises hinged means for the upper end of the support leg with respect to the bar structure, formed by a plate mounted between the support leg and the bar structure, these three pieces joined by a transverse shaft. Preferably, the aforementioned plate will have a "U" shaped body with two grooves on both sides, for the transversal passage of the shaft and so that it can also be moved along these grooves depending on the reclining position in which the outer casing is located with respect to the rigid structure.

According to this preferred configuration, the rigid structure is fixed and the outer casing of the first seat is fastened with possibility of inclination on said rigid structure by two different points: one fixation through the plate to the outer casing and another fixation of the a lower part of the bar structure to the outer casing by means of a guiding mechanism, so that the outer casing of the first seat is movable in different reclining positions with respect to the rigid structure (including the support leg) through a guiding mechanism, for example by means of collars grooves that allow the fastening points to be guided by the interior of said grooves and allows anchoring in different positions within said grooves. This anchoring is carried out, for example, by one or more buttons. Through these two lower and upper fastening points that have a guiding portion, the first chair can be tilted in different reclining positions with respect to the rigid structure.

According to a preferred example of embodiment, the bar structure consists of at least two bars separated by a certain distance from each other, which have more than one section with different slopes (e.g. four sections). It is precisely in this space between bars that one upper part of the support leg fits and is housed in its folded arrangement. The bar configuration can be replaced by another type of rigid structure.

In addition, the bar structure may optionally comprise one or more "U" shaped reinforcing bars, which connect the two bars together with the swivel base. Preferably, the rigid structure will be made of a metallic material, and also preferably the two bars that make up the bar structure with the support base and with the "U" bars are joined by welding, although other means of union are possible without altering the essentiality of the invention.

According to a possible example of embodiment, the swivel base of the rigid structure presents a flat base of circular contour, which can rotate 360° with respect to the shaft of the central shaft of the circle in a direction perpendicular to the base and be anchored in two different positions with respect to the fixed Isofix base: one position facing forwards and another position facing backwards. In this way, depending on the specific needs of the child, the first seat can be installed and used in both positions: RF and FF.

The support leg is adjustable in height in order to be able be adjusted to each car, and for its bottom part to have a stop point with the floor of the rear of the vehicle. It is common for the means of height to be adjustable, for example, two male-female tubular elements which are extendable in different preset positions by a plurality of holes arranged at different heights. Depending on a possible embodiment, the hinged support leg is not removable from the rigid inner structure, but is only foldable. In an alternative version, the hinged support leg could be detachable. The support leg has a length such that in its position of maximum extension it reaches the floor of the interior of a vehicle. Preferably, the support leg is adjustable in height from a maximum deployment position to a non-extension position and is configured for at least two male-female telescopic sections, wherein the male lower section in its retracted position (i.e. of a smaller section) is slideable inside and fits completely inside the upper female section

(of a larger section). The upper female section comprises a protruding portion at its lower end and a base element is provided at the lower part of the lower male leg of the support leg. The protruding portion abuts inferiorly against the base element of the leg and also acts as a structural abutment when the support leg is in a folded position against the first seat and in its non-extension position.

In the upper part of the support leg a cover element can be provided to cover the upper part of the support leg. This cover element can be articulated by its upper base (in the same way as the support leg), so that when the support leg is in the unfolded position it is folded with the same support leg and when the support leg is in folded position the cover element is also folded.

According to a preferential example of embodiment, the second seat is constituted by a carrycot of such external dimensions to be installed inside the first seat without protruding or almost without protruding from it. In order to be able to anchor the second seat in the housings of the first seat it includes some points of attachable and detachable anchors on both sides. Preferably, the second seat will consist of a one-piece structure, made of very light materials (preferably weighing less than 2 kg), such as plastic (e.g. polyamide or polypropylene), which may be covered by a layer of porexpan (expanded polystyrene (EPS) foam) that covers the entire interior opening of the carrycot. It can also incorporate a reinforcement headrest, preferably made of porexpan. The second seat may have a handle to carry the carrycot. Preferably, the second seat, which is smaller than the first seat, has a resting angle such that the baby goes practically lying on, so minimizing the risk of oxygen desaturation, bradycardia and hypoxia. Its innovative design provides an optimal, healthy and safe position for the baby to travel both anchored in the first seat, and anchored in a chassis of a stroller.

As for the connection system between the second and the first seat, it can preferably be a cliptype connection system, which is formed by a male element arranged in the second seat that is anchored by clipping into a female element arranged in the first seat, and which are coincident. Thus, in order to install the second seat on top of the first seat, a single vertical downward movement is made to place the respective male elements in the respective grooves of the two fixing housings of the first seat, without any further manipulation of the first seat being necessary. And in order to remove the second seat, the two pushbuttons located on the sides must be pulled, and the second seat will be uninstalled from the first seat with a single gesture of the user.

Compared to the Isofix fixed base, it has a very advantageous and particular configuration to allow the rotation of the rigid structure and its fixation in two opposite angular positions. For this purpose, it presents, according to a preferential example of embodiment, a body with a flat lower surface and a curved upper surface, with a lower front part and a higher rear part (where the two Isofix anchors are located), and where the upper surface has a first front zone inclined to a lesser degree and a second rear zone inclined to a greater degree with respect to the flat lower surface, and in the rear part of the fixed Isofix base a narrower elevation zone is formed, the purpose of which is to support the rear face of the support leg in a folded position.

Preferably, at the back, the fixed Isofix base has a housing with adequate dimensions to house the lower part of the support leg when it is in a folded position, so that the support leg does not protrude outwards with respect to the rigid structure of the first seat. It may be that the housing of the back of the fixed Isofix base is configured to completely contain a lower part of the support leg or, alternatively, it may be that the housing is configured to house only a part (and not the whole) of a lower part of said support leg.

Preferably, the curved top surface of the fixed Isofix base has a first anterior zone that is inclined to a lesser degree, and a second more inclined posterior zone. These two inclined zones make it possible for the first seat to be correctly placed in the two possible positions.

Optionally, the fixed Isofix base also has a lid to close from the back the housing for the bottom of the folded support leg of the Isofix fixed base, so that when the support leg is in the folded position and placed inside the housing is covered by the lid.
- a second seat, smaller in size than the first seat, which may be releasably secured on the first seat,
characterized by the fact that: the lower part of the support leg in this folded position it is fixed to the Isofix base and constitutes a reinforcement of the rigid structure.

The effect produced by this advantageous baby seat chair configuration is that in operation mode with the folded support leg, the assembly formed by the folded support leg + fixed Isofix base + inner rigid structure functions as a compact structure of the first seat, which optimally supports the first seat and minimizes a child's injuries in the event of a crash.

The great advantage that comes from having an Isofix base is that it offers a great security and additional stability to the safety chair assembly.

That is to say that in this alternative embodiment of the invention, the same configuration as

In a preferred embodiment of this alternative embodiment, the upper structure is a structure formed by one or more rigid elements (e.g. tubes or sheets) having more than one section of different inclination or curvature, and wherein an element located in the rear part of the upper structure has (preferably, but not necessarily) a space so that an upper part of the support leg fits in the folded arrangement.

In a possible embodiment of the alternative embodiment of the invention, the safety chair assembly has a fixed Isofix base with a housing arranged at the rear configured to accommodate a lower part of the support leg when it is in the folded position. In order to provide a greater strength of the folded support leg + Isofix base + interior structure assembly, said housing has a geometry and dimensions very similar and slightly larger than the outer contour of the lower leg, so that when the support leg inside this accommodation, there is little space between them.

In this alternative embodiment of the invention, when referring to the term "a part close to the backrest" of the phrase "an upper structure that extends upwards until reaching a part near the backrest of the first seat" we refer to a part located in the immediate vicinity of the back of the first seat without counting the height adjustable head. Preferably, the inner structure will extend until it reaches the rearmost part of the backrest; that is, near the upper base of the backrest (without the head). Also, preferably, the upper structure extends upwards until reaching a part near the upper part of the back of the back of the first seat.

In this alternative embodiment of the invention, when referring to the term "a rear part of the upper structure of the rigid structure" we refer to a part located at some point of the rear part of the upper structure that extends towards the side of the backrest, that is, at any point that is at the height of any point on the back of the first seat. Preferably, the folding support leg is hingedly connected by its upper end to the uppermost end of the rear structure of the rigid structure.

Therefore, in this alternative embodiment of the invention, preferably, the folding support leg is articulated at a point located in the vicinity of the upper part of the backrest (without the head) of the first seat. Precisely in the immediate vicinity of the upper part of the backrest the child's head is disposed, so that having the point of articulation of the leg in this place has great benefits in terms of security. The applicant has verified (as will be seen later) that the closer the point of articulation of the support leg to the upper end of the back of the first seat (without counting the head) is, the better the behaviour of the first seat in a crash situation.

Preferably, in this alternative embodiment, the Fixed Isofix base comprises at the rear (that is, on the side of the Isofix anchors) of the Fixed Isofix base a locking/unlocking mechanism to be able to lock (keeping it fixed) a lower part of the leg support when in the folded position. The locking/unlocking mechanism is preferably by means of a manual push-button that allows a part of the lower part of the support leg to be unanchored from the anchoring point of the Isofix fixed base. As an example, this anchor/lock point located at the rear of the Fixed Isofix base is a housing that holds a lower point of the folded support leg prisoner.

Preferably, in this alternative embodiment, the support leg is articulately fixed at its upper end to a rear part located in the upper part of the upper structure of the rigid structure, that is to say a part close to the upper end of the upper structure of the rigid structure.

### Performed tests:

The applicant of the invention has carried out several crash tests to verify the benefits of the chair and lower chair assembly of the present invention under compliance with particular specifications established in Regulation No. 129 of the Economic Commission for Europe of the United Nations (UN / UNECE). This Regulation No. 129 UN / ECE R129 is the one currently in force in Europe for child restraint systems used on board motor vehicles.

In particular, the applicant performed four different crash tests to guarantee the effectiveness of the chair assembly of the invention in its function of minimizing the risks of injury or death in the event of an accident.

Two different seats were tested with a mannequin sitting in each seat: a seat that we will call no. 1 (corresponding to the chair assembly of the invention with and without the upper chair in position in favor of the march with the support leg folded) and a conventional seat in position in favor of the march that we will call no. 2 (which can rotate 360° and can be anchored in two different positions (for and against the march) thanks to the provision of an Isofix base and which has a support leg that extends from the Isofix base). These two seats were subjected to a crash test and several sensors were placed on the chest and the head of the mannequins measured the respective accelerations produced. These sensors measure the accelerations produced in the 3-axis shock. These accelerations are measured in force "g" per 3 milliseconds of time unit.

The terms Q0, Q1 and Q3 that appear in the following results table refer to different types of dummies that represent children from birth to approximately 4 years.

In these tests, with the corresponding dummies, the acceleration and displacement readings suffered by the dummy in different configurations/crash situations are measured. For example, in this case a frontal crash (which is a "type" shock) has been recreated at an approximate speed of 50Km/h and a braking with an acceleration of 20 to 22 g's force to measure what the dummy's behaviour has been in displacements and accelerations and thus know, the ability of the restraint system of both models of child seats to reduce the child's injuries in cases of collision.

| **Dynamics comparative testing GW Support Leg - Frontal Impact** | | | | | | |
|---|---|---|---|---|---|---|
| | | | PRODUCT: | Child seat No. 1 in FF position | Conventional child seat No. 2 in FF position | |
| | | | POSITION: upright/reclined | **reclined** | **reclined** | **% Reduction** |
| **First seat + Upper second seat** | **Q0** | **HEAD** | a res 3ms (g) | **40,35** | **61,06** | 34 |
| | | | Displacement X (mm) | **415** | **481** | 14 |
| | | **CHEST** | a res 3ms (g) | **45,69** | **50,04** | 9 |
| | **Q1** | **HEAD** | a res 3ms (g) | **34,11** | **49,39** | 31 |
| | | | Displacement X (mm) | **397** | **556** | 29 |
| | | **CHEST** | a res 3ms (g) | **32,58** | **40,24** | 19 |

| | | | PRODUCT: | Child seat No. 1 in FF position | Conventional child seat No. 2 in FF position | |
|---|---|---|---|---|---|---|
| | | | POSITION: upright/reclined | **reclined** | **reclined** | **% Reduction** |
| **First seat (whitout upper second seat)** | **Q1** | **HEAD** | a res 3ms (g) | **39,5** | **49,39** | 20 |
| | | | Displacement X (mm) | **433** | **556** | 22 |
| | | **CHEST** | a res 3ms (g) | **35,54** | **40,24** | 12 |
| | **Q3** | **HEAD** | a res 3ms (g) | **36,78** | 59,6 | 38 |
| | | | Displacement X (mm) | **498** | 425 | -17 |
| | | **CHEST** | a res 3ms (g) | **35,51** | 50,47 | 30 |

The previous table shows the different values of accelerations and displacements suffered by the different mannequins Q0, Q1 and Q3 in the different crash situations. There is clearly a notable reduction (ranging from 9% to 34%) both in the acceleration values and in the displacements suffered by mannequins in the different crash situations in the first situation where the set has been tested chair of the complete invention (i.e. with the second upper chair arranged on top of the first lower chair).

In the second case tested where the No. 1 chair of the invention has been tested without mounting the second upper seat, reductions are also seen (ranging from 12% to 38%) both in acceleration values and in those of acceleration. manikin displacements, except in a single case where there is a 17% increase in a displacement value.

These results have been very surprising and not foreseeable and show that the presence of the folded support leg generates an increase in reinforcement to the rest of the interior structure of the first seat, and provides greater and surprising resistance of the chair assembly in the case of a frontal crash.

### Brief description of the drawings:

In order to better understand the description made, a set of drawings has been provided which, schematically and solely by way of non-limiting example, represent a practical case of embodiment of this invention.
Figure 1 is a front perspective view of the car seat of the present invention when the first car seat is in the FF position, and is in the position of maximum inclination and with the headrest slightly extended, for an example of embodiment.
Figure 2a is a side elevation view of the first car safety seat of this invention in the same position as Figure 1.
Figure 2b is a longitudinal sectional view along line A-A 'of Figure 1 of the first car safety seat of the present invention in the same FF position as Figures 1 and 2.
Figure 2c is a side elevation view of the first car safety seat of this invention in the same FF position as Figure 1, but in this case in the non-reclining position, and with the headrest not extended.
Figure 3 is a rear elevational view of the first car safety seat of the present invention in the same FF position as the previous figure 2b.
Figure 4 is a rear perspective view of the car safety seat set of the present invention when the first seat and the second seat are in the RF position, and the first seat is in maximum reclined position, for an example of embodiment.
Figure 5 is a front perspective view of the car seat set of this invention in the same position as Figure 4.
Figure 6 is a top floor view of the car seat set of this invention in the same position as the previous Figures 4 and 5.
Figure 7a is a side elevation view of the car seat set of this invention in the same position as Figures 4, 5 and 6.
Figure 7b is the side elevation view of the car seat set of the present invention like that in Figures 7a, but in non-reclining position, and with the headrest of the first seat lowered.
Figure 8 is a perspective view of the second seat in the car safety set of the present invention, for an example of embodiment.
Figure 9 is a lateral elevation view of the same example of embodiment of the second seat as Figure 8.
Figure 10 is a perspective view of the rigid structure of the first seat of the present invention, for an example of embodiment, in which the leg is in an unfolded position (i.e. in working position), and in which the casing is in a non-reclining position.
Figure 11 is a lateral elevation view of the same example of embodiment of the rigid structure of the first seat as Figure 10.
Figure 12 is a top floor view of the same example of embodiment of the rigid structure of the first seat as Figures 10 and 11.
Figure 13 is a frontal perspective view of the rigid structure of the first seat of the present invention, for an example of embodiment, in which the leg is in a folded position (i.e. in a resting position), where the rigid structure has rotated 180° with respect to the position of Figures 10, 11 and 12, and where the casing is in a non-reclining position.
Figure 14 is a lateral elevation view of the same example of embodiment of the rigid structure of the first seat as Figure 13.
Figure 15 is a top floor view of the same example of embodiment of the rigid structure of the first seat as Figures 13 and 14.
Figure 16 is a frontal perspective view of the fixed Isofix base of the first seat of the present invention, for an example of embodiment.
Figure 17 is a lateral elevation view of the same example of embodiment of the fixed Isofix base as Figure 16.
Figure 18 is a top floor view of the same example of embodiment of the fixed Isofix base as Figures 16 and 17.

### Description of a preferred embodiment:

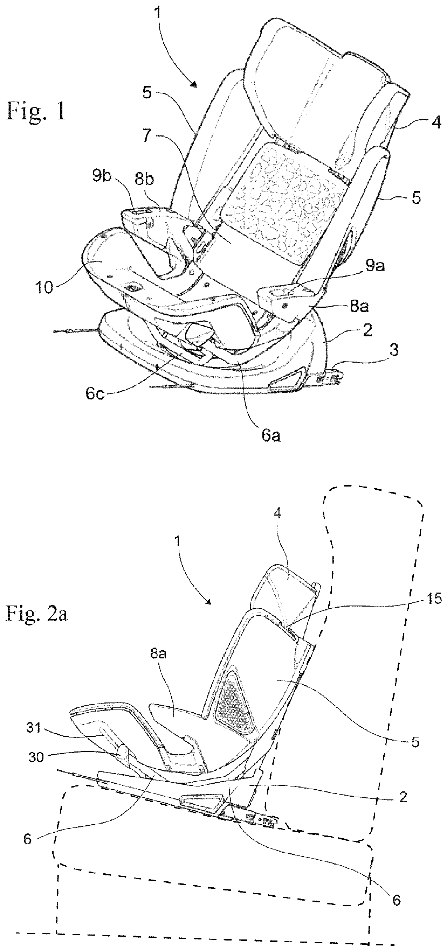

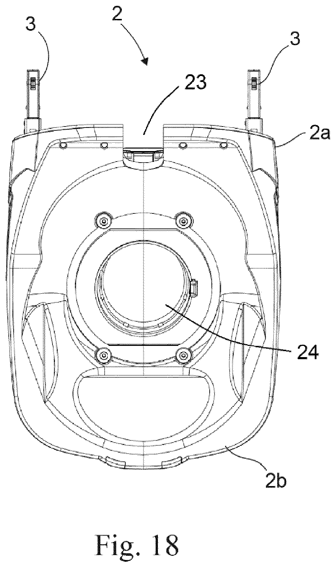

A preferred embodiment of the seat set is described below with reference to attached Figures 1 to 18.

One of the possible embodiments of the present invention relates to a car seat set having a first seat (1) and a second seat (11). The first seat (1) is fixed in a rotational and non-releasable manner to a fixed Isofix base (2) which is fixed to the vehicle seat, in such a way that this first seat (1) can be anchored in two different positions with respect to the fixed base (2), as appropriate: it also has a second seat, smaller in size than the first seat, consisting of a carrycot that is permanently and freely installed inside the first seat without protruding, or protruding very slightly from it.

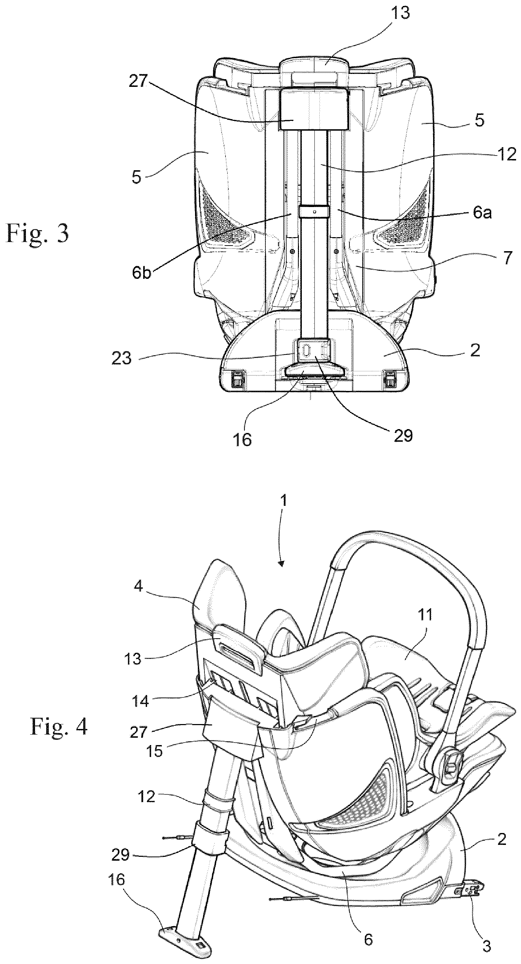

As shown in Figures 1, 2 and 3, the first seat (1) can be used alone, anchored facing frontwards, when the child measures approximately from 100 cm to 150 cm, and where the five-point belt of the first seat (not shown) is hidden inside the backrest (7). Also, the first seat (1) can be used alone, anchored in a backwards position, when the baby measures approximately from 60 cm to 105 cm (this position is not represented), and where the five-point belt of the first seat (1) is removed. Finally, the first seat (1) can be used facing backwards together with the second seat (11) anchored on top, when the baby measures approximately 40 cm to 75 cm, see Figures 4, 5, 6 and 7.

The first seat (1) comprises an outer casing (10, 7, 8a, 8b, 5, 4) in the form of a seat, and a rigid structure (6) arranged at the bottom and back of the casing, and where the rigid structure (6) is mounted on the fixed Isofix base (2), in such a way that the first seat (1) can rotate with respect to the fixed Isofix base (2) and can be anchored in two different positions: a first position facing forwards and a second position facing backwards, and where the first seat (1) also includes a foldable support leg (12).

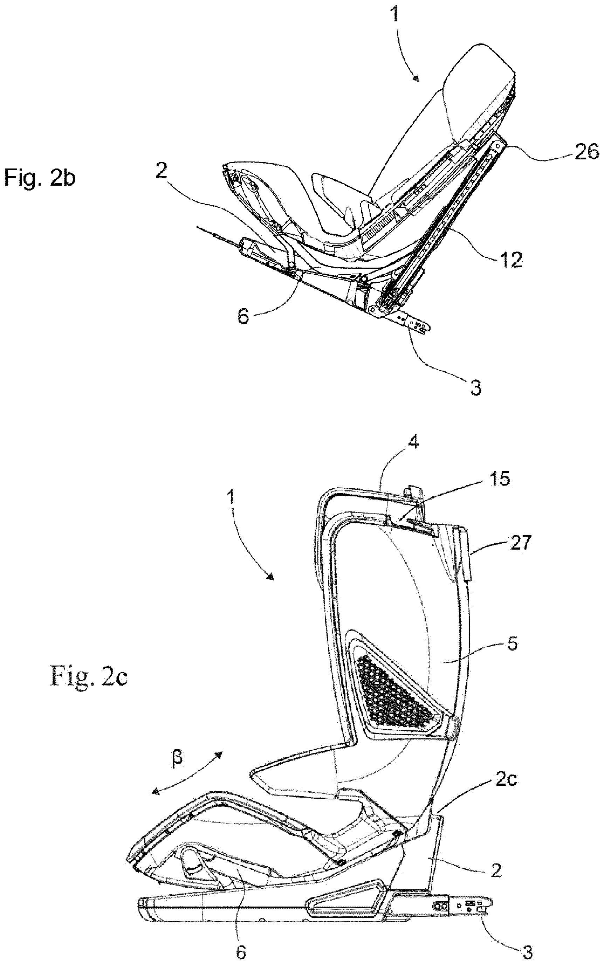

The rigid structure (which integrally incorporates the folding support leg) is fixed, while the casing of the first seat (1) is mounted on the assembly formed by the rigid structure (6) + support leg (12) + base Isofix (2). The casing of the first seat (1) is attached to the rigid structure assembly (6) + support leg (12) + Isofix base (2) by an upper point ("B") of the rigid structure (6) located in the plate (22) and for a lower point ("A"). The plate (22) is fixed to the housing and with the possibility of guided movement with respect to the assembly (6 + 12 + 2) by means of the guide (22). The housing of the first seat (1) is attached to the bottom point ("A") of the rigid structure by means of a guide (31) (see figure 2a) provided in the housing, so that it can adopt different inclination positions at different β angles with respect to said set (see tilt arrow in figure 2c).

A possible constitution of the general structure of the outer casing (10, 7, 8a, 8b, 5, 4) of the first seat (1) is shown in Figures 1, 2 and 3, where a seat with a particular curvature (10), a backrest (7) with two sides (5), two armrests (8a, 8b), and a headrest (4) extendable in height that is mounted on the upper part of the backrest (5) can be observed. Figure 1 shows the two receptacle housings (9a, 9b) of each of the anchor pins (18a, 18b) of the second seat (11). Figures 2, 3 and 4 show the provision in the upper base of the sides (5) of one of the two housings (15) to attach to the car's seat belt.

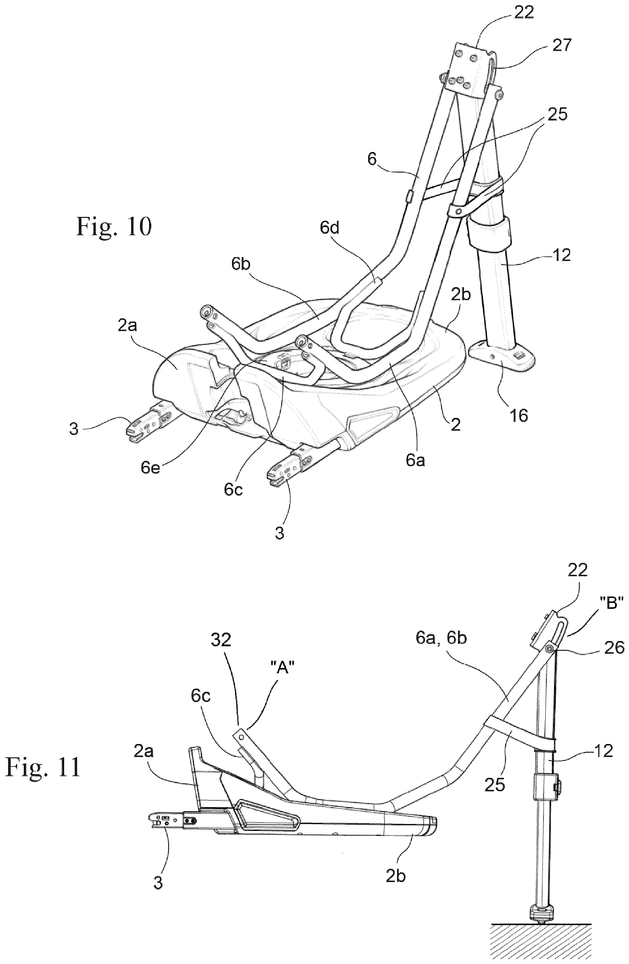

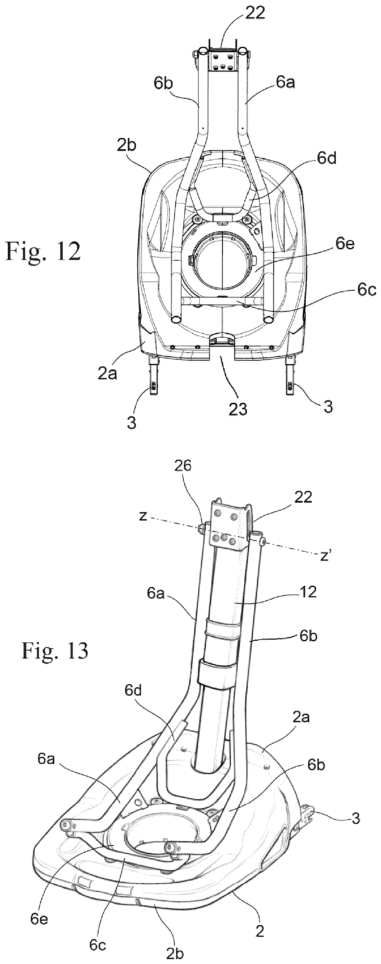

A possible constitution of the rigid structure (6) with the integrated foldable support leg (12), mounted on the fixed Isofix base (2), can be seen in Figures 10 to 15. Figures 10 to 12 show the rigid structure (6) with the support leg (12) in a folded out position in which the support leg (12) is separated from the rigid structure (6) (i.e. when the first seat (1) is in the RF position), while in the rest of Figures 13 to 15 the rigid structure (6) is represented with the support leg (12) in a folded position in which the support leg (12) is housed in the rear part of the rigid structure (6) and lowered into a housing (23) of the fixed Isofix base (2) (see Figures 13 to 15) (i.e. when the first seat (1) is arranged FF). It can be observed how the support leg (12) is integrated in the rigid structure (6) and is hinged by its upper end to the upper end of the rigid structure (6).

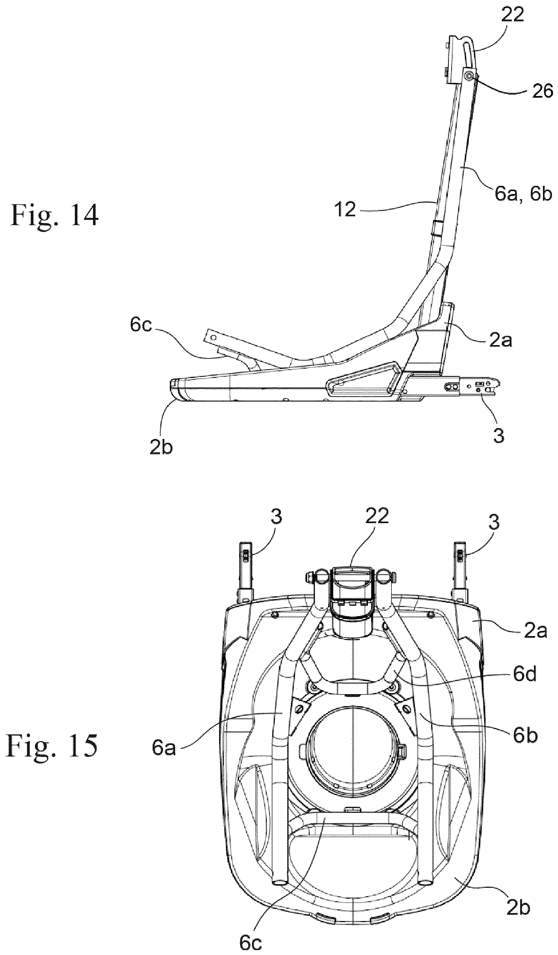

Figure 15 shows how the support leg (12) in its folded position is located in the space between the two upper bars (6a, 6b), so that there is no space between the lateral bases of the support leg (12) and the two upper bars (6a, 6b) and thus the set of the two upper bars (6a, 6b) with the support leg (12) acts as a reinforcing block. In addition, as shown in Figure 14, the support leg (12) in its folded position is arranged at an inclination substantially equal to the inclination of the two upper bars (6a, 6b), so that this alignment also favors to create this block reinforcement upper bars (6a, 6b) + support leg (12). This reinforcement of the support leg (12) in the rigid structure gives greater resistance to the chair assembly in the event of a possible accident / crash as demonstrated by the tests carried out by the applicant.

The rigid structure (6) is made up of a swivel base (6e) which is solidly joined to a bar structure (6a, 6b), where this bar structure in turn is made up of two tubes or bars 6a, 6b separated from each other by a certain distance, where each tube or bar 6a, 6b presents a plurality of sections of different inclinations. Figure 11 shows four different pipe sections, from left to right we have a first descending section, next an almost flat section, next an ascending section, and a last ascending section with a greater level of inclination. Precisely this design of the tubes with different inclined sections allows the rigid structure (6) with the foldable leg (12) to remain in both positions on the fixed Isofix base 2: FF and RF, and can allow reclining in different reclining positions both with the casing facing forwards and backwards, acquiring a position suitable for the baby or child. The distance between the two tubes (6a, 6b) narrows at the top, as shown in Figure 12. In addition to the two tubes or bars 6a, 6b, the bar structure 6 presents, in this example of embodiment, two "U" shaped reinforcing bars that connect the two bars together with the swivel base. The first 6d reinforcement bar connects the two bars at the front, while the second 6c reinforcement bar connects the two bars at the rear. As shown in Figures 12 and 15, the swivel base 6e consists of a contour structure with a noticeably circular shape.

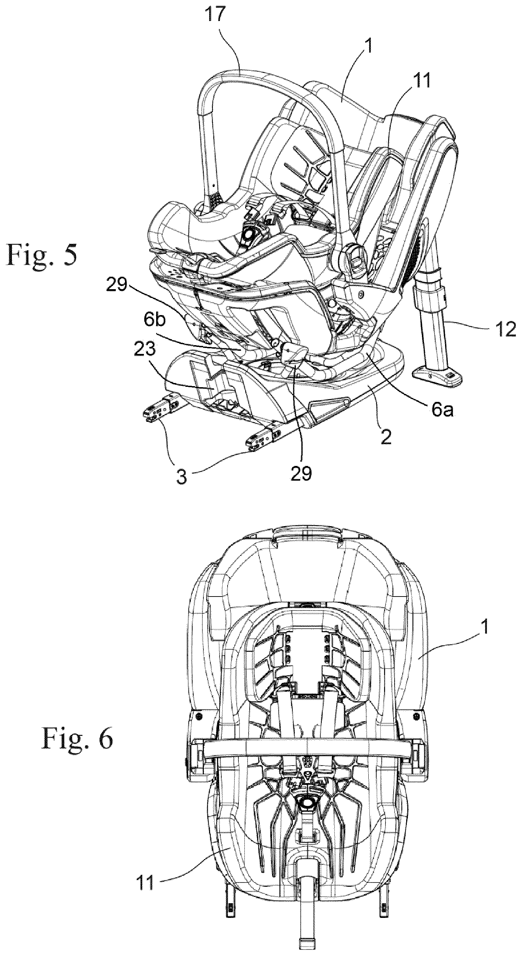

As shown in Figure 5, there are two buttons (30) so that the user can tilt the housing in different positions with respect to the internal structure (6) + fixed support leg (12). The outer casing (10, 7, 8a, 8b, 5, 4) of the first seat (1) can be tilted slightly with respect to the inner structure (6) by two different collision points: an upper point "B" on the plate (22) and another lower point "A" disposed at the front end (31) of the inner structure (6), see figures 5 and 11.

With respect to the support leg (12), it is hinged by one of its ends to the back of both tubes 6a, 6b, through a plate (22) and a shaft (26), see Figures 10 to 15, , which allows the rotation around the axis of rotation Z-Z'. The hinge plate (22) is arranged between the two tubes (6a and 6b) through the union of a transverse shaft (26) that can run through the grooves on both sides of this hinge plate (22), see Figures 11 and 14. Thus, the transverse shaft (26) may be in the lowest position (as in Figure 10) when the first seat (1) is in the non-reclining position or in the highest position (not shown in the figures) when the first seat (1) is in the maximum reclining position relative to the rigid structure (6). As can be seen in the attached figures, for example in figure 11, the slotted grooves (27) are slightly curved.

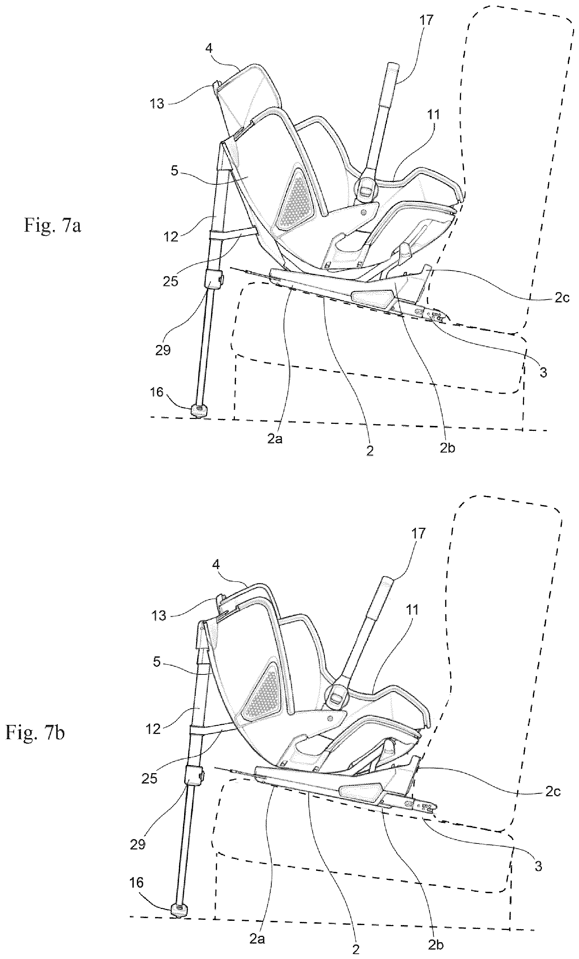

As can be seen in the attached figures, a cover element (27) is provided on the upper part of the support leg (12) to cover the upper part of the support leg (12). This cover element can be articulated by its upper base in the same way as the support leg (12), that is to say that when the support leg is in the unfolded position, it is folded with the same support leg (see figures 4, 7a and 7b ) and when the support leg is in the folded position the cover element (27) is also in the folded position (see figure 3).

As shown in Figures 1 to 5, the bar structure (6) has a housing opposite the leg (see Fig. 10) to be fixed by means of anchoring elements to the housing seat. The bar structure (6) is mounted running through the back of the rear of the casing of the first seat (1), and being fixed by its opposite end through anchoring elements (28) fixed to the plate (22).

As shown in Figures 12 and 15, the swivel base (6e) is mounted on the fixed Isofix base (2) by means of rotary connecting means in such a way that it remains fixed although it can rotate with respect to the fixed Isofix base and can be anchored in FF and RF positions.

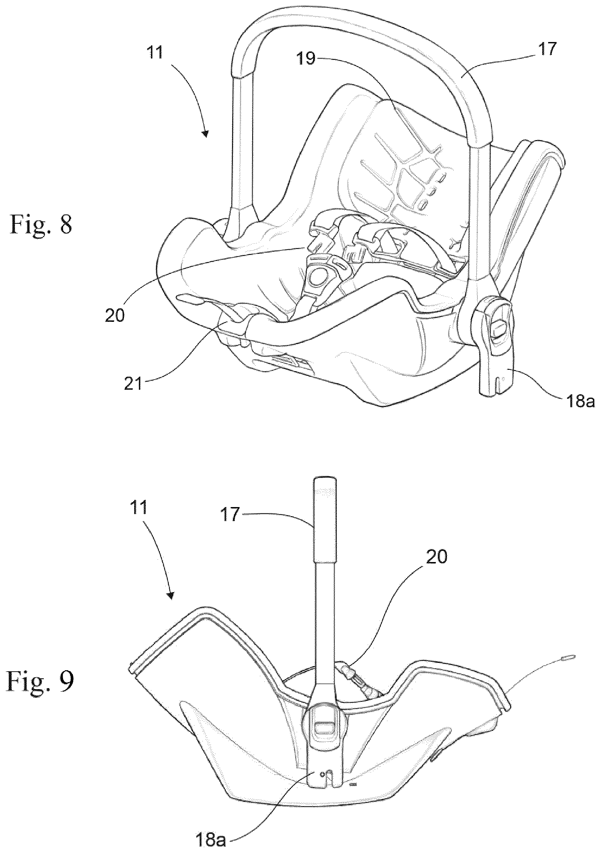

With respect to a possible embodiment of the second seat (11), shown independently in Figures 8 and 9, it has smaller external dimensions than the first seat (1), to be able to fit in it. It consists of a carrycot-shaped body made of lightweight materials, fitted with a handle (17), and connection pins (18a, 18b) arranged on each side. It also has a five-point strap inside (20). As shown in Figure 9, the body has a higher front part and a lower rear part.

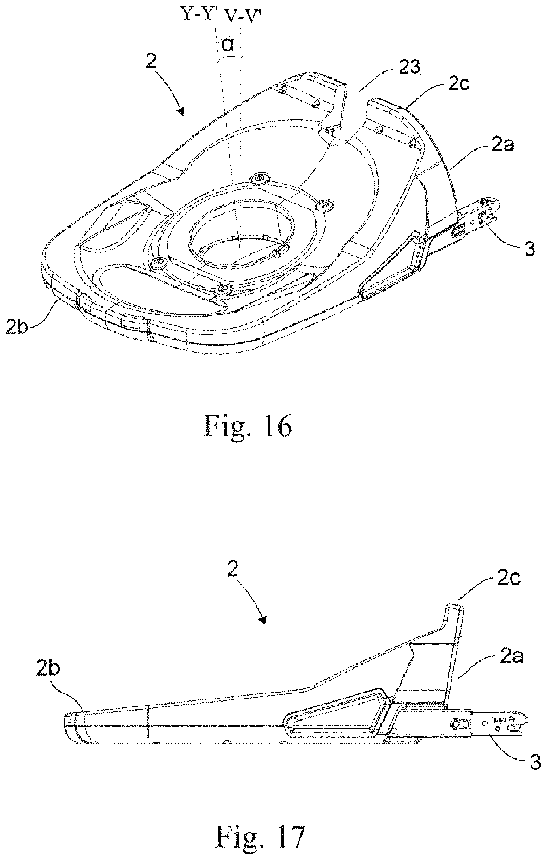

With respect to a possible embodiment of the fixed Isofix base (2), shown independently in Figures 16 to 18, it is made up of a body with a flat bottom surface and a curved top surface, with a lower front (2b) and a higher rear (2a). At the bottom of this higher rear part (2a) are the two Isofix anchors (3) for attachment to the rear seat of the car. In its central part there is a hole (24). At the back it has a housing (23) with adequate dimensions to house the lower part of this support leg (12) when it is in a folded position, so that the support leg (12) does not protrude outwards from the rigid structure of the first seat (see Figure 14). As can be clearly seen in Figure 17, the upper curved surface of the fixed Isofix base (2) has a first front zone inclined to a lesser degree and a second rear zone inclined to a greater degree, and at the rear of the fixed Isofix base (2) a narrower elevated zone is formed (2c), whose function is to support the final part of the rigid structure (6) in the unreclined position (see Figure 3).

Preferably, and as illustrated in Figures 16 and 17, the upper surface (26) of the fixed Isofix base (2) comprises a support surface (25) for the rotating base of the inner structure. This support surface (25) is arranged slightly inclined at an angle α about 15° with respect to the flat bottom surface (24) of the fixed Isofix base (2) (corresponding to the horizontal), so that the rotating base ( 6e) of the inner structure (6) can rotate around the perpendicular axis Y-Y 'of the bearing surface that is inclined an angle α of about 15° with respect to the vertical V-V' (see figure 16).

As seen in Figure 17, the rear base (2a) (Isofix side) of the fixed Isofix base (2) has a slight inclination with respect to the vertical. In said rear base (2a) a housing (23) (see figures 3 and 5) is provided for the lower end of the folded support leg (12'). As shown in Figure 3, the support leg in the folded position at the back of the first seat and in the non-extended position (that is, with the male lower leg section fully arranged inside the female upper leg) has the stop element (29) stop against the base element (16) of the lower leg section (12) and this stop element (29) acts as a structural stop at the fixed Isofix base (2).

As can be seen in said figures 3 and 5, said housing (23) for the lower end of the leg preferably has an opening equal to the shape of the lower part of the support leg (12 '), in this case a stepped form, for receiving and accommodating in a tight manner to the lower end of the leg (16) and also to the lower portion (29).

The attached figures have not shown the cover to subsequently close the housing (23) of the Fixed Isofix base when the support leg is folded and arranged inside the housing. This cover, which is preferably articulated by its lower base, is configured to fully cover this housing (23).

Although reference has been made to a specific embodiment of the seat set of the invention, it is evident to a person skilled in the art that the device described is susceptible to numerous variations and modifications, and that all the aforementioned details can be replaced by other technically equivalent ones, without departing from the scope of protection defined by the attached claims.

## Claims

1. Child car safety seat (1, 2), of the type that can be used by a baby measuring 40 cm to 150 cm in size, comprising:
- a fixed Isofix base (2) and
- a first seat (1), fixed in a rotary way on the fixed Isofix base (2), where the first seat (1) is suitable to anchor above a second seat (11) which is smaller size, and where the first seat (1) comprises at least:
- one outer casing (10, 7, 8a, 8b, 5, 4) in the form of a seat, comprising a seat (10), a backrest (7) with sides (5) and two armrests (8a, 8b), and
- an inner rigid structure (6) mounted on the fixed Isofix base (2) so that the first seat (1) can rotate with respect to the fixed Isofix base (2) and can be anchored in two different positions: a first position facing forwards and a second position facing backwards,
**characterised in that** the inner rigid structure (6) comprises:
- a swivel base (6e) solidly attached to an upper structure (6a, 6b) which extends upwards until reaching a part near the back (7) of the first seat (1), wherein this rigid structure (6) is configured for being mounted in the lower and rear part of the outer casing (10, 7, 8a, 8b, 5, 4) of the first seat (1), and where the swivel base (6e) is configured for being mounted in a rotatory manner on the fixed Isofix base (2); and
- a foldable support leg (12), which is integrated into the rigid structure (6), the support leg (12) being height adjustable and hinged at its upper end to one rear part of the upper structure (6a, 6b) of the rigid structure (6), so that the support leg (12) can adopt two different positions:
- an unfolded position when the first seat (1) is facing backwards, in which the support leg (12) is separated from the rigid structure (6), or
- a folded position when the first seat (1) is facing frontwards, in which the support leg (12) is anchored by a lower part to a part of the fixed Isofix base, in such a way that, in this folded position, one inferior part of the support leg (12) remains fixed to the Isofix base (2) and acts as a reinforcement of the rigid structure (6).

2. Child car safety seat (1, 2) according to claim 1, wherein it further comprises a second seat (11), smaller in size than the first seat (1), that can be releasably anchored on the first seat (1).

3. Child car safety seat (1, 2;1 , 2, 11), according to claim 1 or 2, wherein the support leg (12) is height-adjustable from a maximum deployed position to a non-extension position and it is configured for at least a pair of male and female telescopic sections and wherein the upper female section comprises a protruding portion at its lower end and in the lower part of the lower male section of the support leg a base element is provided, so that in its position of total retraction the lower male section is slidable from the inside and it is completely kept inside the upper female section (of greater section) and the protruding portion abuts inferiorly against the base of the leg and also acts as a structural abutment when the support leg is in the folded and non-extension position.

4. Child car safety seat (1, 2;1 , 2, 11), according to claim 1 or 2, wherein the fixed Isofix base (2) comprises at the rear, on the side of the Isofix anchors, of the fixed Isofix base a locking/unlocking mechanism to be able to block a lower part of the support leg (12) when it is in the folded position.

5. Child car safety seat (1, 2;1 , 2, 11), according to claim 1 or 2, wherein the fixed Isofix base (2) comprises a housing (23) in a rear part of the fixed Isofix base (2) to accommodate a lower part of the support leg (12) when the support leg (12) is in the folded position.

6. Child car safety seat (1, 2;1 , 2, 11), according to claim 1 or 2 or 3, wherein the support leg (12) is hingedly fixed at its upper end to a part close to the upper end of the upper structure (6a, 6b) of the rigid structure (6).

7. Child car safety seat (1, 2;1 , 2, 11), according to claim 1 or 2, wherein the rigid structure (6) comprises hinged means for the upper end of the support leg (12) formed by a plate (22) mounted between the support leg (12) and the rear structure (6a, 6b), joined together by a transverse shaft (26) and wherein the plate (22) has a "U"-shaped body with grooves (27) on both sides (22') for the transverse passage of the shaft (26) and so that it can also be moved along these grooves (27) depending on the reclining position in which the outer casing (10, 7, 8a, 8b, 5, 4) is located with respect to the rigid structure (6).

8. Child car safety seat (1, 2;1 , 2, 11), according to claim 1 or 2 or 6, wherein the outer casing (10, 7, 8a, 8b, 5, 4) of the first seat (1) can be reclined in different reclining positions with respect to the rigid structure (6) and the support leg (12), which are fixed.

9. Child car safety seat (1,2;1,2,11) according to claim 7,wherein the outer casing (10, 7, 8a, 8b, 5, 4) is fastened with possibility of inclination on said rigid structure (6) by two different points: an attachment by means of the plate (22) to the outer casing (10, 7, 8a, 8b, 5, 4) and another attachment of a lower part of the bar structure (6a, 6b) to the outer casing (10, 7, 8a, 8b, 5, 4), so that the outer casing (10, 7, 8a, 8b, 5, 4) of the first seat (1) is movable in different reclining positions with respect to the rigid structure (6) through a guiding mechanism with slotted grooves (27).

10. Child car safety seat (1, 2;1 , 2, 11), according claim 1 or 2, wherein the upper structure (6a, 6b) is a structure formed by one or more rigid elements (6a, 6b), which have more than one section of different inclination or curvature, and wherein a rigid element (6a, 6b) of the rear part of the upper structure (6a, 6b) has a space so that an upper part of the support leg (12) may kept disposed inside in the folded arrangement.

11. Child car safety seat (1, 2;1 , 2, 11), according to claim 1 or 2, wherein the upper structure (6a, 6b) extends upwards until it reaches a part near the upper part of the backrest (7) of the first seat (1).

12. Child car safety seat (1, 2;1 , 2, 11), according to claim10, wherein the elements are two bars (6a, 6b) and also comprises one or more "U"-shaped reinforcing bars (6c, 6d), which connect the two bars (6a, 6b) with the swivel base (6e).

13. Child car safety seat (1, 2;1 , 2, 11), according to claim 1 or 2, wherein the outer casing (10, 7, 8a, 8b, 5, 4) of the first seat (1) comprises, in addition to a seat (10), a backrest (7) with sides (5), two hand rests (8a, 8b), also a headrest (4) extendable in height, and wherein each armrest comprises respective housings (9a, 9b) to receive each of the connections (18a, 18b) of the second seat (11).

14. Child car safety seat (1, 2, 11), according to claim 2 and 13, wherein the second seat (11), configured to be used by a baby measuring approximately 40 cm to 75 cm, consists of a carrycot of such exterior dimensions as to be installed inside the first seat (1) without protruding from it, and includes removable anchors (18a, 18b) to anchor the second seat (11) in the housings (9a, 9b) of the first seat (1).

15. Child car safety seat (1, 2;1 , 2, 11), according to claim 1 or 2, wherein the fixed Isofix base (2) consists of a body with a flat bottom surface (24) and a top surface (26), with a lower front (2b) and a higher rear (2a), and where the upper surface presents a first anterior zone of less inclination and a second posterior zone of greater inclination with respect to the lower flat surface, and in the most posterior part of the fixed Isofix base (2) a narrower elevated zone (2c) is formed, to support the rear face of the support leg (12) in a folded position.

## Patentansprüche

1. Autosicherheitskindersitz (1, 2) eines Typs, der von einem Kleinkind einer Größe von 40 cm bis 150 cm verwendet werden kann, umfassend:
- eine befestigte Isofix-Basis (2), und
- einen ersten Sitz (1), der an der befestigten Isofix-Basis (2) drehbar befestigt ist, wobei der erste Sitz (1) zur Verankerung über einem zweiten Sitz (11), der eine kleinere Größe hat, geeignet ist, und wobei der erste Sitz (1) zumindest umfasst:
- ein Außengehäuse (10, 7, 8a, 8b, 5, 4) in der Form eines Sitzes, umfassend einen Sitz (10), eine Rückenlehne (7) mit Seiten (5) und zwei Armlehnen (8a, 8b), und
- eine steife Innenstruktur (6), die an der befestigten Isofix-Basis (2) montiert ist, so dass sich der erste Sitz (1) in Bezug auf die befestigte Isofix-Basis (2) drehen kann und in zwei unterschiedlichen Positionen verankert werden kann: einer ersten nach vorne weisenden Position, und einer zweiten nach hinten weisenden Position,
**dadurch gekennzeichnet, dass** die steife Innenstruktur (6) umfasst:
- eine Schwenkbasis (6e), die fest an einer oberen Struktur (6a, 6b) angebracht ist, die sich nach oben erstreckt, bis sie einen Teil in der Nähe der Rückseite (7) des ersten Sitzes (1) erreicht, wobei diese steife Struktur (6) zur Montage in dem unteren und hinteren Teil des Außengehäuses (10, 7, 8a, 8b, 5, 4) des ersten Sitzes (1) konfiguriert ist, und wobei die Schwenkbasis (6e) zur drehbaren Montage an der Isofix-Basis (2) konfiguriert ist; und
- ein klappbares Stützbein (12), das in die steife Struktur (6) integriert ist, wobei das Stützbein (12) höhenverstellbar ist und mit seinem oberen Ende an einem hinteren Teil der oberen Struktur (6a, 6b) der steifen Struktur (6) angelenkt ist, so dass das Stützbein (12) zwei unterschiedliche Positionen einnehmen kann:
- eine nicht eingeklappte Position, wenn der erste Sitz (1) nach hinten weist, in der das Stützbein (12) von der steifen Struktur (6) getrennt ist, oder
- eine eingeklappte Position, wenn der erste Sitz (1) nach vorn weist, in der das Stützbein (12) durch ein unteres Teil an einem Teil der befestigten Isofix-Basis verankert ist, so dass in dieser eingeklappten Position ein unterer Teil des Stützbeins (12) an der Isofix-Basis (2) befestigt bleibt und als eine Verstärkung der steifen Struktur (6) wirkt.

2. Autosicherheitskindersitz (1, 2) nach Anspruch 1, wobei er ferner einen zweiten Sitz (11) umfasst, der eine kleinere Größe als der erste Sitz (1) hat, der lösbar an dem ersten Sitz (1) verankert werden kann.

3. Autosicherheitskindersitz (1, 2; 1, 2, 11) nach Anspruch 1 oder 2, wobei das Stützbein (12) von einer maximal ausgefahrenen Position bis zu einer nicht ausgezogenen Position höhenverstellbar ist und für mindestens ein Paar Steck- und Aufnahme-Teleskopabschnitte konfiguriert ist und wobei der obere Aufnahmeabschnitt einen vorstehenden Abschnitt an seinem unteren Ende umfasst und in dem unteren Teil des unteren Steckabschnitts des Stützbeins ein Basiselement vorgesehen ist, so dass in seiner vollständig eingezogenen Position der untere Steckabschnitt von innen verschiebbar ist und vollständig im Inneren des oberen Aufnahmeabschnitts (mit größerem Schnitt) gehalten wird und der vorstehende Abschnitt unten an der Basis des Beins anliegt und ebenfalls als strukturelle Auflage dient, wenn das Stützbein in der eingeklappten und nicht ausgezogenen Position ist.

4. Autosicherheitskindersitz (1, 2; 1, 2, 11) nach Anspruch 1 oder 2, wobei die befestigte Isofix-Basis (2) an der Rückseite, auf der Seite der Isofix-Verankerungen der befestigten Isofix-Basis einen Sperr-/Entsperr-Mechanismus umfasst, um in der Lage zu sein, einen unteren Teil des Stützbeins (12) zu blockieren, wenn dieses in der eingeklappten Position ist.

5. Autosicherheitskindersitz (1, 2; 1, 2, 11) nach Anspruch 1 oder 2, wobei die befestigte Isofix-Basis (2) in einem hinteren Teil der befestigten Isofix-Basis (2) ein Gehäuse (23) umfasst, um einen unteren Teil des Stützbeins (12) aufzunehmen, wenn das Stützbein (12) in der eingeklappten Position ist.

6. Autosicherheitskindersitz (1, 2; 1, 2, 11) nach Anspruch 1 oder 2 oder 3, wobei das Stützbein (12) an seinem oberen Ende gelenkig an einem Teil in der Nähe des oberen Endes der oberen Struktur (6a, 6b) der steifen Struktur (6) befestigt ist.

7. Autosicherheitskindersitz (1, 2; 1, 2, 11) nach Anspruch 1 oder 2, wobei die steife Struktur (6) Gelenkmittel für das obere Ende des Stützbeins (12) umfasst, welche durch eine Platte (22) gebildet sind, die zwischen dem Stützbein (12) und der hinteren Struktur (6a, 6b) montiert ist, welche miteinander durch eine Querwelle (26) verbunden sind, und wobei die Platte (22) einen "U"-förmigen Körper mit Nuten (27) auf beiden Seiten (22') für den Querverlauf der Welle (26) umfasst, und so dass sie abhängig von der Liegeposition, in der sich das Außengehäuse (10, 7, 8a, 8b, 5, 4) in Bezug auf die steife Struktur (6) befindet, auch entlang dieser Nuten (27) bewegt werden kann.

8. Autosicherheitskindersitz (1, 2; 1, 2, 11) nach Anspruch 1 oder 2 oder 6, wobei das Außengehäuse (10, 7, 8a, 8b, 5, 4) des ersten Sitzes (1) in unterschiedlichen Liegepositionen in Bezug auf die steife Struktur (6) und das Stützbein (12), die befestigt sind, zurückgelegt werden kann.

9. Autosicherheitskindersitz (1, 2; 1, 2, 11) nach Anspruch 7, wobei das Außengehäuse (10, 7, 8a, 8b, 5, 4) mit der Möglichkeit zum Neigen der steifen Struktur (6) durch zwei unterschiedliche Punkte befestigt ist: einer Anbringung an dem Außengehäuse (10, 7, 8a, 8b, 5, 4) mittels der Platte (22) und einer anderen Anbringung eines unteren Teils der Stangenstruktur (6a, 6b) an dem Außengehäuse (10, 7a, 8a, 8b, 5, 4), so dass das Außengehäuse (10, 7, 8a, 8b, 5, 4) des ersten Sitzes (1) in Bezug auf die steife Struktur (6) durch einen Führungsmechanismus mit Kulissenführung (27) in unterschiedliche Liegepositionen bewegbar ist.

10. Autosicherheitskindersitz (1, 2; 1, 2, 11) nach Anspruch 1 oder 2, wobei die obere Struktur (6a, 6b) eine Struktur ist, die durch ein oder mehr steife Elemente (6a, 6b) gebildet wird, die mehr als einen Abschnitt unterschiedlicher Neigung oder Krümmung aufweisen, und wobei ein steifes Element (6a, 6b) des hinteren Teils der oberen Struktur (6a, 6b) einen Raum aufweist, so dass ein oberer Teil des Stützbeins (12) in dem Inneren der eingeklappten Anordnung angeordnet bleiben kann.

11. Autosicherheitskindersitz (1, 2; 1, 2, 11) nach Anspruch 1 oder 2, wobei sich die obere Struktur (6a, 6b) nach oben erstreckt, bis sie einen Teil in der Nähe des oberen Teils der Rückenlehne (7) des ersten Sitzes (1) erreicht.

12. Autosicherheitskindersitz (1, 2; 1, 2, 11) nach Anspruch 10, wobei die Elemente zwei Stangen (6a, 6b) sind und ferner eine oder mehr "U"-förmige-Versteifungsstangen (6c, 6d) umfassen, welche die zwei Stangen (6a, 6b) mit der Schwenkbasis (6e) verbinden.

13. Autosicherheitskindersitz (1, 2; 1, 2, 11) nach Anspruch 1 oder 2, wobei das Außengehäuse (10, 7, 8a, 8b, 5, 4) des ersten Sitzes (1), zusätzlich zu einem Sitz (10), eine Rückenlehne (7) mit Seiten (5), zwei Handlehnen (8a, 8b), ferner eine höhenverstellbare Kopfstütze (4) umfasst, und wobei jede Armlehne jeweilige Gehäuse (9a, 9b) umfasst, um jede der Verbindungen (18a, 18b) des zweiten Sitzes (11) aufzunehmen.

14. Autosicherheitskindersitz (1, 2; 1, 2, 11) nach Anspruch 2 und 13, wobei der zweite Sitz (11), der zur Nutzung durch ein Kleinkind einer Körpergröße von etwa 40 bis 75 cm konfiguriert ist, aus einer Babytragetasche solcher Außenabmessungen besteht, dass diese im Innern des ersten Sitzes (1) installiert wird, ohne über diesen vorzustehen, und abnehmbare Verankerungen (18a, 18b) umfasst, um den zweiten Sitz (11) in den Gehäusen (9a, 9b) des ersten Sitzes (1) zu verankern.

15. Autosicherheitskindersitz (1, 2; 1, 2, 11) nach Anspruch 1 oder 2, wobei die befestigte Isofix-Basis (2) aus einem Körper mit einer flachen Unterseite (24) und einer Oberseite (26), mit einer niedrigeren Vorderseite (2b) und einer höheren Rückseite (2a) besteht, und wobei die obere Fläche eine erste vordere Zone mit geringerer Neigung und eine zweite hintere Zone mit größerer Neigung in Bezug auf die untere flache Oberfläche umfasst, und in dem am weitesten hinten liegenden Teil der befestigten Isofix-Basis (2) eine schmalere erhöhte Zone (2c) gebildet ist, um die hintere Fläche des Stützbeins (12) in einer eingeklappten Position zu halten.

## Revendications

1. Siège de sécurité enfant pour voiture (1, 2), du type qui peut être utilisé par un bébé mesurant 40 cm à 150 cm, comprenant :
- une base Isofix fixe (2) et
- un premier siège (1), fixé d'une manière rotative sur la base Isofix fixe (2), où le premier siège (1) est adapté pour s'ancrer au-dessus d'un second siège (11) qui est de dimensions plus petites, et où le premier siège (1) comprend au moins :
- une coque externe (10, 7, 8a, 8b, 5, 4) ayant la forme d'un siège, comprenant un siège (10), un dossier (7) avec des côtés (5) et deux accoudoirs (8a, 8b), et
- une structure interne rigide (6) montée sur la base Isofix fixe (2) de sorte que le premier siège (1) puisse tourner par rapport à la base Isofix fixe (2) et puisse être ancré dans deux positions différentes : une première position orientée vers l'avant et une seconde position orientée vers l'arrière,
**caractérisé en ce que** la structure rigide interne (6) comprend :
- une base pivotante (6e) attachée solidement à une structure supérieure (6a, 6b) qui s'étend vers le haut jusqu'à atteindre une partie proche du dossier (7) du premier siège (1), dans lequel cette structure rigide (6) est configurée pour être montée dans la partie inférieure et arrière de la coque externe (10, 7, 8a, 8b, 5, 4) du premier siège (1), et où la base pivotante (6e) est configurée pour être montée d'une manière rotative sur la base Isofix fixe (2) ; et
- un montant de support pliable (12), qui est intégré à la structure rigide (6), le montant de support (12) étant réglable en hauteur et articulé au niveau de son extrémité supérieure sur une partie arrière de la structure supérieure (6a, 6b) de la structure rigide (6), de sorte que le montant de support (12) peut adopter deux positions différentes :
- une position dépliée lorsque le premier siège (1) est orienté vers l'arrière, dans laquelle le montant de support (12) est séparé de la structure rigide (6), ou
- une position repliée lorsque le premier siège (1) est orienté vers l'avant, dans laquelle le montant de support (12) est ancré par une partie inférieure à une partie de la base Isofix fixe, de sorte que, dans cette position repliée, une partie inférieure du montant de support (12) reste fixée à la base Isofix (2) et agit comme un renfort de la structure rigide (6).

2. Siège de sécurité enfant pour voiture (1, 2) selon la revendication 1, dans lequel il comprend en outre un second siège (11), inférieur en taille au premier siège (1), qui peut être ancré de manière amovible sur le premier siège (1).

3. Siège de sécurité enfant pour voiture (1, 2, 11), selon la revendication 1 ou 2, dans lequel le montant de support (12) est réglable en hauteur depuis une position déployée maximale jusqu'à une position de non-extension et est configuré pour au moins une paire de sections télescopiques mâle et femelle et dans lequel la section femelle supérieure comprend une section en saillie à son extrémité inférieure et dans la partie inférieure de la section mâle inférieure du montant de support un élément de base est prévu, de sorte que dans sa position de rétraction totale, la section mâle inférieure est coulissable depuis l'intérieur et est totalement maintenue à l'intérieur de la section femelle supérieure (de plus grande section) et la portion en saillie vient en butée de manière inférieure contre la base du montant et agit également comme une butée structurelle lorsque le montant de support se trouve dans la position repliée et de non-extension.

4. Siège de sécurité enfant pour voiture (1, 2, 11), selon la revendication 1 ou 2, dans lequel la base Isofix fixe (2) comprend à l'arrière, sur le côté des ancres Isofix, de la base Isofix fixe un mécanisme de verrouillage/déverrouillage pour être en mesure de bloquer une partie inférieure du montant de support (12) lorsqu'il se trouve dans la position repliée.

5. Siège de sécurité enfant pour voiture (1, 2, 11), selon la revendication 1 ou 2, dans lequel la base Isofix fixe (2) comprend un logement (23) dans une partie arrière de la base Isofix fixe (2) pour loger une partie inférieure du montant de support (12) lorsque le montant de support (12) se trouve dans la position repliée.

6. Siège de sécurité enfant pour voiture (1, 2, 11), selon la revendication 1, 2 ou 3, dans lequel le montant de support (12) est fixée de manière articulée à son extrémité supérieure sur une partie proche de l'extrémité supérieure de la structure supérieure (6a, 6b) de la structure rigide (6).

7. Siège de sécurité enfant pour voiture (1, 2, 11), selon la revendication 1 ou 2, dans lequel la structure rigide (6) comprend un moyen articulé pour l'extrémité supérieure du montant de support (12) formée par une plaque (22) montée entre le montant de support (12) et la structure arrière (6a, 6b), joints ensemble par un axe transversal (26) et dans lequel la plaque (22) a un corps en « U » avec des rainures (27) des deux côtés (22') pour le passage transversal de l'axe (26) et de façon qu'il puisse également être déplacé le long de ces rainures (27) selon la position d'inclinaison dans laquelle se trouve la coque externe (10, 7, 8a, 8b, 5, 4) par rapport à la structure rigide (6).

8. Siège de sécurité enfant pour voiture (1, 2, 11), selon la revendication 1, 2 ou 6, dans lequel la coque externe (10, 7, 8a, 8b, 5, 4) du premier siège (1) peut être inclinée dans différentes positions d'inclinaison par rapport à la structure rigide (6) et au montant de support (12), qui sont fixes.

9. Siège de sécurité enfant pour voiture (1, 2, 11), selon la revendication 7, dans lequel la coque externe (10, 7, 8a, 8b, 5, 4) est fixée avec une possibilité d'inclinaison sur ladite structure rigide (6) par deux points différents : une fixation au moyen de la plaque (22) sur la coque externe (10, 7, 8a, 8b, 5, 4) et une autre fixation d'une partie inférieure de la structure de barre (6a, 6b) sur la coque externe (10, 7, 8a, 8b, 5, 4), de sorte que la coque externe (10, 7, 8a, 8b, 5, 4) du premier siège (1) soit mobile dans différentes positions d'inclinaison par rapport à la structure rigide (6) au moyen d'un mécanisme de guidage avec des rainures fendues (27).

10. Siège de sécurité enfant pour voiture (1, 2, 11), selon la revendication 1 ou 2, dans lequel la structure supérieure (6a, 6b) est une structure formée par un ou plusieurs éléments rigides (6a, 6b), qui ont plus d'une section d'inclinaison ou de courbure différente, et dans lequel un élément rigide (6a, 6b) de la partie arrière de la structure supérieure (6a, 6b) a un espace de sorte qu'une partie supérieure du montant de support (12) peut être maintenue disposée à l'intérieur dans l'agencement replié.

11. Siège de sécurité enfant pour voiture (1, 2, 11), selon la revendication 1 ou 2, dans lequel la structure supérieure (6a, 6b) s'étend vers le haut jusqu'à atteindre une partie proche de la partie supérieure du dossier (7) du premier siège (1).

12. Siège de sécurité enfant pour voiture (1, 2, 11), selon la revendication 10, dans lequel les éléments sont deux barres (6a, 6b) et comprenant également une ou plusieurs barres de renfort en forme de « U » (6c, 6d) qui relient les deux barres (6a, 6b) à la base pivotante (6e).

13. Siège de sécurité enfant pour voiture (1, 2, 11), selon la revendication 1 ou 2, dans lequel la coque externe (10, 7, 8a, 8b, 5, 4) du premier siège (1) comprend, en plus d'un siège (10), un dossier (7) avec des côtés (5), deux repose-main (8a, 8b), ainsi qu'un appui-tête (4) extensible en hauteur, et dans lequel chaque accoudoir comprend des logements (9a, 9b) respectifs pour recevoir chacune des connexions (18a, 18b) du second siège (11).

14. Siège de sécurité enfant pour voiture (1, 2, 11), selon les revendications 2 et 13, dans lequel le second siège (11), configuré pour être utilisé par un bébé mesurant approximativement 40 cm à 75 cm, est constitué par une nacelle de dimensions extérieures telles qu'elle est installée à l'intérieur du premier siège (1) sans dépasser de celui-ci, et comprend des ancres amovibles (18a, 18b) pour ancrer le second siège (11) dans les logements (9a, 9b) du premier siège (1).

15. Siège de sécurité enfant pour voiture (1, 2, 11), selon la revendication 1 ou 2, dans lequel la base Isofix fixe (2) est constituée par un corps ayant une surface inférieure plane (24) et une surface supérieure (26), avec une partie avant inférieure (2b) et une partie arrière supérieure (2a), et où la surface supérieure présente une première zone antérieure de moindre inclinaison et une seconde zone postérieure de plus grande inclinaison par rapport à la surface plane inférieure, et dans la partie la plus postérieure de la base Isofix fixe (2) une zone élevée plus étroite (2c) est formée, pour supporter la face arrière du montant de support (12) dans une position repliée.
